# EUROPÄISCHE PATENTSCHRIFT

(11) **EP 2 511 308 B1**
(45) Veröffentlichungstag und Bekanntmachung des Hinweises auf die Patenterteilung: **17.12.2014**
(21) Anmeldenummer: 12162805.1
(22) Anmeldetag: 02.04.2012
(51) Int. Cl.: C08F 36/06, C08K 3/04, C08K 5/00, B60C 1/00

(54) **Fahrzeugluftreifen**
Pneumatic tyres for a vehicle
Pneus de véhicule

(30) Priorität: 11.04.2011 DE 102011001939
(43) Veröffentlichungstag der Anmeldung: 17.10.2012
(73) Patentinhaber: Continental Reifen Deutschland GmbH, 30165 Hannover (DE)
(72) Erfinder: Kendziorra, Dr. Norbert, 30827 Garbsen (DE); Butterweck, Frank, 34513 Waldeck Sachsenhausen (DE)
(74) Vertreter: Finger, Karsten

(56) Entgegenhaltungen:
- EP-A1- 2 108 527
- WO-A1-03/089257
- DE-A1- 10 014 892
- US-A1- 2010 065 173
- DATABASE WPI Week 200454 Thomson Scientific, London, GB; AN 2004-555692 XP002680693, & JP 2004 188858 A (SUMITOMO RUBBER IND LTD) 8. Juli 2004 (2004-07-08)
- DATABASE WPI Week 200318 Thomson Scientific, London, GB; AN 2003-178353 XP002680694, & JP 2002 240510 A (OHTSU TIRE & RUBBER CO LTD) 28. August 2002 (2002-08-28)

## Beschreibung

Die Erfindung betrifft einen Fahrzeugluftreifen mit einem Laufstreifen aus Profilpositiven und Nuten, wobei der Laufstreifen aus einer Kautschukmischung besteht, die 10 - 50 Gew-% Weichmacher aufweist.

Moderne Laufstreifenmischungen enthalten Weichmacher, wodurch Vorteile in der Performance des Fahrzeugreifens erreicht werden können. So ist beispielsweise bei Winterreifen ein verbesserter Nassgriff oder bei Sommerreifen ein Abriebsvorteil erhaltbar.

Die Angaben an Weichmachern in Gew-% beziehen sich auf die gesamte Kautschukmischung mit allen Bestandteilen.

Jedoch hat es sich gezeigt, dass die modernen Laufstreifenmischungen mit Weichmachern während der Reifenherstellung, insbesondere während der Vulkanisation des grünen, noch unvulkanisierten Reifenrohlings Nachteile aufweisen. Als Weichmacher werden aromatenarme mineralische Öle eingesetzt.

Aus der JP 2004 188858 A ist ein Laufstreifen mit einer Deckschicht bekannt geworden, wobei der Laufstreifen und die Deckschicht aus unterschiedlichen Kautschukmischungen, jedoch ohne Bestandteile an Weichmachern, bestehen. Aus der JP 2002 240510 A ist ein Cap-/Base-Laufstreifen aus unterschiedlichen Kautschukmischungen bekannt geworden, wobei die Base-Laufstreifenmischung einen bestimmten Tan delta als Parameter als Maß für den Hystereseverlust aufweist.

Während der Vulkanisation des grünen, aus Kautschuklagen bestehenden Reifenrohlings wird dieser unter bestimmten Temperatur- und Druckbedingungen durch Vernetzungsreaktionen in seinen gummielastischen Zustand überführt. Zudem wird dem Reifen während der Vulkanisation durch die Gestaltung der Formsegmente der Vulkanisierform seine äußere Gestaltung, so auch sein Laufstreifenprofil, eingepresst.

Es ist üblich, dass Vulkanisierformen Entlüftungsventile aufweisen. Denn die beim Einformen des Reifenrohlings in die Vulkanisierform zwischen diesem und den Formflächen verbleibende Luft muss aus der Form abgeführt werden. Andernfalls würden optische Fehlstellen an der äußeren Formgestaltung des Reifens verbleiben. Diese Luftabführung erfolgt über sogenannte Entlüftungsventile, die mit ihrem einen Ende fluchtend in der Formfläche der Vulkanisierform angeordnet sind und die abzuführende Luft nach radial außen transportieren.

Die modernen Laufstreifenmischungen mit Weichmachern weisen nun den Nachteil auf, dass die Entlüftungsventile vermehrt verstopfen und die Formflächen durch Anhaftungen vermehrt verschmutzen können. Durch Oxidationsprozesse bilden sich auf den Formflächen und an den Entlüftungsventilen sehr harte und widerstandsfähige Verkrustungen, die nur sehr schwer und sehr aufwendig aus den Vulkanisierformen entfernbar sind.

Der Erfindung liegt daher die Aufgabe zugrunde, einen Fahrzugluftreifen mit einem modernen, Weichmacher aufweisenden Laufstreifen zur Verfügung zu stellen, der während des Vulkanisationsprozesses die Vulkanisierform gar nicht oder nur sehr geringfügig verschmutzt sowie ein Verfahren zur Herstellung dieses Fahrzeugluftreifens zu Verfügung zu stellen.

Gelöst wird die gestellte Aufgabe in Bezug auf den Fahrzeugluftreifen erfindungsgemäß dadurch, dass der Laufstreifen aus Profilpositiven und Nuten vollständig mit einer Deckschicht überzogen ist und dass die Deckschicht aus einer Kautschukmischung besteht, die 0 - 25 Gew-% Weichmacher aufweist.

Die Deckschicht hat die Funktion einer Schutzschicht, so dass die Weichmacher nicht oder nicht in kritischer Konzentration in direkten Kontakt mit der Formoberfläche gelangen können. Somit sind die vermehrten Verkrustungen an den Formflächen und das vermehrte Verstopfen der Entlüftungsventile vermieden. Vorteilhaft ist es, wenn die Deckschicht aus demselben Polymersystem wie der Laufstreifen besteht.

Vorteilhaft ist es, wenn die Deckschicht eine Dicke von 0,1 mm bis 2,0 mm, vorzugsweise von 1,0 mm aufweist. Ein Laufstreifen mit einer Deckschicht der vorgenannten Dicke ist gut herstellbar.

Zweckmäßig ist es, wenn der Weichmacher Flüssig-BR ist.

Um die elektrostatischer Aufladung des Fahrzeugluftreifens über den Laufstreifen ableiten zu können, ist es vorteilhaft, wenn die Deckschicht elektrisch leitfähigen Füllstoff, vorzugsweise Ruß, aufweist.

Gelöst wird die gestellte Aufgabe in Bezug auf das Verfahren zur Herstellung des Fahrzeugluftreifens erfindungsgemäß dadurch, dass man das Bauteil Deckschicht unter Druck- und Wärmeeinfluss, vorzugsweise mittels eines Multiplex-Extruders oder mittels eines Kalanders auf das Bauteil Laufstreifen aufbringt.

Alternativ wird das Verfahren dadurch gelöst, dass man das Bauteil Deckschicht mittels Sprühverfahren auf das Bauteil Laufstreifen aufbringt, wobei die sprühfähige Lösung für die Deckschicht wässrig als Latex oder mittels eines organischen, leicht flüchtigen Lösungsmittels vorliegt.

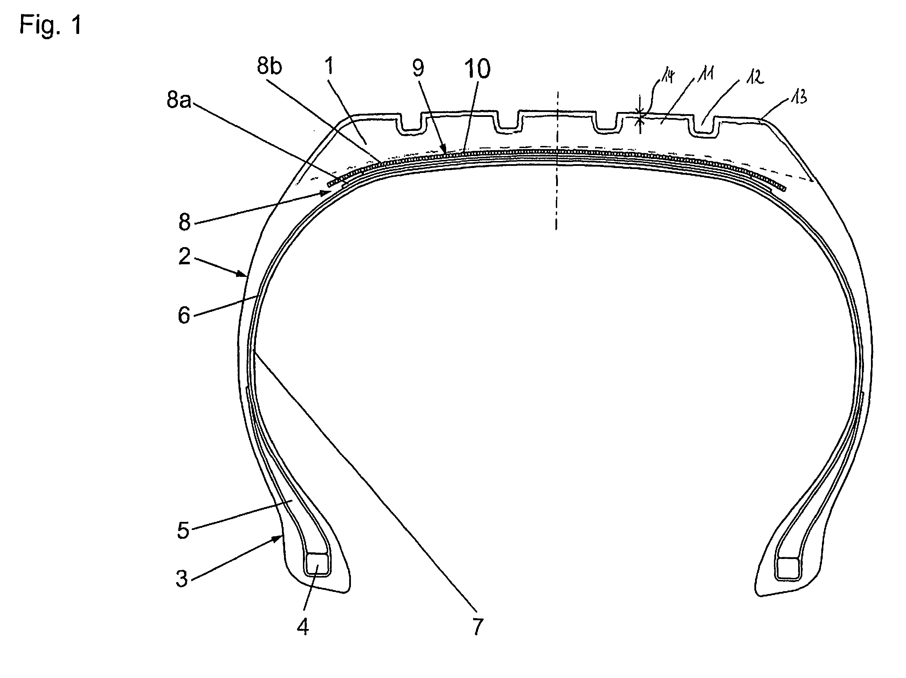

Weitere Merkmale, Vorteile und Einzelheiten der Erfindung werden nun anhand der Zeichnung, die ein schematisches Ausführungsbeispiel darstellt, näher beschrieben. Dabei zeigt die einzige Figur, Fig. 1, schematisch einen Querschnitt durch einen Fahrzeugluftreifen.

Der in Fig.1 gezeigte Fahrzeugluftreifen ist ein Reifen für Personenkraftwagen radialer Bauart und weist einen Laufstreifen 1, Seitenwände 2, Wulstbereiche 3 mit Wulstkernen 4 und Wulstprofilen 5, ferner eine Karkasslage 6 auf, welche die beiden Wulstkerne 4 umläuft, eine Innenschicht 7 sowie eine zwischen der Karkasslage 6 und dem Laufstreifen 1 angeordneten Gürtelverband 8. Der Gürtelverband 8 weist bei der gezeigten Ausführungsform zwei Gürtellagen 8a und 8b auf, welche in bekannter Weise aus in eine Gummimischung eingebetteten, parallel zueinander verlaufenden Festigkeitsträgern aus Stahlkord bestehen können. Radial außerhalb der beiden Gürtellagen 8a, 8b befindet sich eine Bandagenlage 9 - eine sog. cap-ply Lage, welche durch kontinuierliches und spiralförmiges Wickeln eines Kordes 10 in Umfangsrichtung des Reifens gebildet wird und die seitlichen Randkanten des Gürtelverbandes 8 überdeckt.

Der Laufstreifen 1 besteht aus Profilpositiven 11 und Nuten 12 und ist aus einer modernen Kautschukmischung für Laufstreifen gefertigt, die Weichmacher, hier Flüssig-BR (Flüssig-Polybutadien), enthält. Der Laufstreifen 1 ist vollständig mit einer Deckschicht 13 überzogen, so dass die Deckschicht 13 sowohl die Nuten 12 als auch die Profilpositive 11 abdeckt. Die Deckschicht 13 besteht aus einer Kautschukmischung, die etwa 12,5 Gew-% Weichmacher oder optional keine Weichmacher aufweist. Die Deckschicht 13 hat die Funktion einer Schutzschicht, so dass während der Vulkanisation des grünen Reifenrohlings die Weichmacher der Laufstreifenmischung nicht in direkten Kontakt mit der Formoberfläche der Vulkanisierform gelangen können. Die Deckschicht weist eine Dicke 14 von 1,0 mm auf.

Weist die Deckschicht 13 im grünen Reifenrohling eine gleichmäßige Dicke 14 über deren axiale Breite auf, so wird Dicke der Deckschicht 13 im heizgepressten Reifen über deren axiale Breite variieren. Insbesondere an den Nutflanken wird die Deckschicht 13 durch das Einpressen des Laufstreifenprofils eine geringere Dicke 14 als an den mit der Straßenoberfläche in Kontakt kommenden Flächen der Profilpositiven 11 aufweisen.

### Bezugszeichenliste

- 1: Laufstreifen
- 2: Seitenwand
- 3: Wulstbereich
- 4: Wulstkern
- 5: Wulstprofil
- 6: Karkasslage
- 7: Innenschicht
- 8: Gürtelverband
- 8a: Gürtellage
- 8b: Gürtellage
- 9: Bandagenlage
- 10: PET-Kord
- 11: Profilpositiv
- 12: Nut
- 13: Deckschicht
- 14: Dicke der Deckschicht

## Patentansprüche

1. Fahrzeugluftreifen mit einem Laufstreifen (1) aus Profilpositiven (11) und Nuten (12), wobei der Laufstreifen (1) aus einer Kautschukmischung besteht, die 10 - 50 Gew% Weichmacher aufweist,
**dadurch gekennzeichnet,**
**dass** der Laufstreifen (1) aus Profilpositiven (11) und Nuten (12) vollständig mit einer Deckschicht (13) überzogen ist und dass die Deckschicht (13) aus einer Kautschukmischung besteht, die 0 - 25 Gew-% Weichmacher aufweist.

2. Fahrzeugluftreifen nach Anspruch 1, **dadurch gekennzeichnet, dass** Deckschicht (13) eine Dicke (14) von 0,1 mm bis 2,0 mm, vorzugsweise von etwa 1,0 mm aufweist.

3. Fahrzeugluftreifen nach Anspruch 1 oder 2, **dadurch gekennzeichnet, dass** der Weichmacher Flüssig-Polybutadien ist.

4. Fahrzeugluftreifen nach einem oder mehreren Ansprüchen 1 bis 3, **dadurch gekennzeichnet, dass** die Deckschicht (13) elektrisch leitfähigen Füllstoff, vorzugsweise Ruß, aufweist.

5. Fahrzeugluftreifen nach einem oder mehreren der vorangehenden Ansprüche, **dadurch gekennzeichnet, dass** der Laufstreifen (1) aus einer Kautschukmischung besteht, die 20 - 30 Gew%, bevorzugt etwa 25 Gew-% Weichmacher aufweist.

6. Fahrzeugluftreifen nach einem oder mehreren der vorangehenden Ansprüche, **dadurch gekennzeichnet, dass** die Deckschicht (13) aus einer Kautschukmischung besteht, die 10 - 15 Gew%, bevorzugt etwa 12,5 Gew-% Weichmacher aufweist.

7. Verfahren zur Herstellung eines Fahrzeugluftreifens gemäß einem oder mehreren der Ansprüche 1 bis 6, **dadurch gekennzeichnet, dass** man das Bauteil Deckschicht (13) unter Druck- und Wärmeeinfluss, vorzugsweise mittels eines Multiplex-Extruders oder mittels eines Kalanders auf das Bauteil Laufstreifen (1) aufbringt.

8. Verfahren zur Herstellung eines Fahrzeugluftreifens gemäß einem oder mehreren der Ansprüche 1 bis 6, **dadurch gekennzeichnet, dass** man das Bauteil Deckschicht (13) mittels Sprühverfahren auf das Bauteil Laufstreifen (1) aufbringt, wobei die sprühfähige Lösung für die Deckschicht wässrig als Latex oder mittels eines organischen, leicht flüchtigen Lösungsmittels vorliegt.

## Claims

1. Pneumatic tyre with a tread (1) made of elevated profile areas (11) and of depressed areas (12), where the tread (1) is composed of a rubber mixture which comprises from 10 to 50% by weight of plasticizer, **characterized in that**
an outer layer (13) completely covers the tread (1) made of elevated profile areas (11) and of depressed areas (12) and that the outer layer (13) is composed of a rubber mixture which comprises from 0 to 25% by weight of plasticizer.

2. Pneumatic tyre according to Claim 1, **characterized in that** the thickness (14) of outer layer (13) is from 0.1 mm to 2.0 mm, preferably about 1.0 mm.

3. Pneumatic tyre according to Claim 1 or 2, **characterized in that** the plasticizer is liquid polybutadiene.

4. Pneumatic tyre according to one or more of Claims 1 to 3, **characterized in that** the outer layer (13) comprises electrically conductive filler, preferably carbon black.

5. Pneumatic tyre according to one or more of the preceding claims, **characterized in that** the tread (1) is composed of a rubber mixture which comprises from 20 to 30% by weight, preferably about 25% by weight, of plasticizer.

6. Pneumatic tyre according to one or more of the preceding claims, **characterized in that** the outer layer (13) is composed of a rubber mixture which comprises from 10 to 15% by weight, preferably about 12.5% by weight, of plasticizer.

7. Process for the production of a pneumatic tyre according to one or more of Claims 1 to 6, **characterized in that** the outer layer (13) component is applied to the tread (1) component with use of pressure and heat, preferably by means of a multiplex extruder or by means of a calender.

8. Process for the production of a pneumatic tyre according to one or more of Claims 1 to 6, **characterized in that** the outer layer (13) component is applied to the tread (1) component by means of spray processes, where the sprayable solution for the outer layer takes the form of aqueous latex or uses a volatile organic solvent.

## Revendications

1. Bandage pneumatique pour roue de véhicule, présentant une bande de roulement (1) constituée de profils positifs (11) et de rainures (12), la bande de roulement (1) étant constituée d'un mélange de caoutchouc qui présente de 10 à 50 % en poids de plastifiant,
**caractérisé en ce que**
la bande de roulement (1) constituée de profils positifs (11) et de rainures (12) est entièrement recouverte d'une couche de recouvrement (13) et
**en ce que** la couche de recouvrement (13) est constituée d'un mélange de caoutchouc qui contient de 0 à 25.% en poids de plastifiant.

2. Bandage pneumatique pour roue de véhicule selon la revendication 1, **caractérisé en ce que** la couche de recouvrement (13) présente une épaisseur (14) de 0,1 mm à 2,0 mm et de préférence d'environ 1,0 mm.

3. Bandage pneumatique pour roue de véhicule selon les revendications 1 ou 2, **caractérisé en ce que** le plastifiant est un polybutadiène liquide.

4. Bandage pneumatique pour roue de véhicule selon l'une ou plusieurs des revendications 1 à 3, **caractérisé en ce que** la couche de recouvrement (13) présente une charge électriquement conductrice, de préférence du noir de carbone.

5. Bandage pneumatique pour roue de véhicule selon l'une ou plusieurs des revendications précédentes, **caractérisé en ce que** la bande de roulement (1) est constituée d'un mélange de caoutchouc qui contient de 20 à 30 % en poids et de préférence environ 25 % en poids de plastifiant.

6. Bandage pneumatique pour roue de véhicule selon l'une ou plusieurs des revendications précédentes, **caractérisé en ce que** la couche de recouvrement (13) est constituée d'un mélange de caoutchouc qui contient de 10 à 15 % et de préférence environ 12,5 % en poids de plastifiant.

7. Procédé de fabrication d'un bandage pneumatique pour roue de véhicule selon l'une ou plusieurs des revendications 1 à 6, **caractérisé en ce que** le composant en couche de recouvrement (13) est appliqué sur le composant en bande de roulement (1) sous l'action de la pression et de la chaleur, de préférence au moyen d'une extrudeuse dite "Multiplexer" ou au moyen d'une calandreuse.

8. Procédé de fabrication d'un bandage pneumatique pour roue de véhicule selon l'une ou plusieurs des revendications 1 à 6, **caractérisé en ce que** le composant en couche de recouvrement (13) est appliqué sur le composant en bande de roulement (1) sous l'action de la pression et de la chaleur, de préférence au moyen d'un procédé de pulvérisation, la solution pulvérisable prévue pour la couche de recouvrement étant aqueuse sous la forme d'un latex ou étant rendue liquide au moyen d'un solvant organique volatil.
